(19) Europäisches Patentamt
European Patent Office
Office européen des brevets

(11) Veröffentlichungsnummer: **0 147 673**
**B1**

(12) # EUROPÄISCHE PATENTSCHRIFT

(45) Veröffentlichungstag der Patentschrift: **25.02.87**

(51) Int. Cl.⁴: **C 08 L 67/06,** C 08 F 299/04, C 08 K 5/18, C 08 K 5/21

(21) Anmeldenummer: **84114654.1**

(22) Anmeldetag: **03.12.84**

(54) **Polymerisierbare Massen und Verwendung von Arylaminen als Härtungsbeschleuniger hierfür.**

(30) Priorität: **13.12.83 DE 3345102**

(43) Veröffentlichungstag der Anmeldung: **10.07.85 Patentblatt 85/28**

(45) Bekanntmachung des Hinweises auf die Patenterteilung: **25.02.87 Patentblatt 87/9**

(84) Benannte Vertragsstaaten: **AT DE FR GB IT**

(56) Entgegenhaltungen: **AT-B-331 518** **DE-A-3 204 444**

(73) Patentinhaber: **BAYER AG, Konzernverwaltung RP Patentabteilung, D-5090 Leverkusen 1 Bayerwerk (DE)**

(72) Erfinder: **Meier, Helmut- Martin, Dr., Wodantal 28, D-4320 Hattingen (DE)**
Erfinder: **Dhein, Rolf, Dr., Deswatinesstrasse 30, D-4150 Krefeld 1 (DE)**
Erfinder: **Winkel, Jens, Dr., Hahnenweg 6, D-5000 Koeln 80 (DE)**
Erfinder: **Klein, Gerhard, Dr., von- Flotow- Strasse 7, D-4019 Monheim (DE)**
Erfinder: **Klöker, Werner, Prof. Dr., Deswatinesstrasse 26, D-4150 Krefeld (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 147 673 B1

LIBER, STOCKHOLM 1987

**Beschreibung**

Die vorliegende Erfindung betrifft die Verwendung neuartiger N,N-disubstituierter Arylamine, welche polymerisationsfähige Gruppen aufweisen, als Härtungsbeschleuniger für polymerisierbare Massen auf Basis ungesättigter Polyesterharze, insbesondere für Spachtel- und Mörtelmassen.

Es ist bekannt, Formmassen auf der Grundlage kalt härtbarer Polyestergießharze unter Verwendung von N,N-Dialkylarylaminen als Polymerisationsbeschleuniger auszuhärten (US-PS 2 480 928). Es ist auch bekannt, ungesättigte Polyester unter Einbau von N,N-Bis-(β-hydroxyalkyl)-arylaminen herzustellen und Formmassen auf dieser Grundlage in Gegenwart von Diacylperoxiden in der Kälte auszuhärten (DE-PS 919 431). Es ist weiterhin bekannt, N,N-Bis-(β-hydroxyalkyl)-arylamine mit Dicarbonsäuren zu einem Polyester oder mit Diisocyanaten zu einem Polyurethan umzusetzen und die resultierenden Produkte ungesättigten Polyesterharzmassen als Härtungsbeschleuniger zuzusetzen (DE-OS 1 943 954, DE-PS 1 643 972). Aus DE-OS 32 02 090, EP-OS 84 784 ist es ebenfalls bekannt, primäre Arylamine in erster Stufe mit Bisepoxiden und in zweiter Stufe mit Monoepoxiden zu oligomeren Härtungsbeschleunigern umzusetzen und diese zur Härtung von ethylenisch ungesättigten Massen zu verwenden.

Die genannten, frei im Harz gelösten Beschleuniger können sowohl vor als auch nach der Härtung migrieren bzw. extrahiert werden oder ihre Reaktivität ist aufgrund ihres polymeren Charakters gering.

Aufgabe der Erfindung ist es, Beschleuniger bereitzustellen, die die oben geschilderten Nachteile nicht aufweisen, die in monomolekularer Form den Harzen zugesetzt und während der Aushärtung in diese eingebaut werden.

Diese Aufgabe wird mittels der nachstehend beschriebenen Urethan- oder Harnstoffgruppen sowie (Meth)acrylestergruppierungen aufweisenden tertiären Amine gelöst, welche darüber hinaus überraschenderweise auch eine höhere Aktivität hinsichtlich der Radikalbildung aufweisen als die entsprechenden tertiären Amine ohne ungesättigte Gruppen.

Die erfindungsgemäß als Beschleuniger für die Polymerisation von ungesättigten Polyesterharzen zu verwendenden tertiären aromatischen Amine entsprechen der allgemeinen Formel (I):

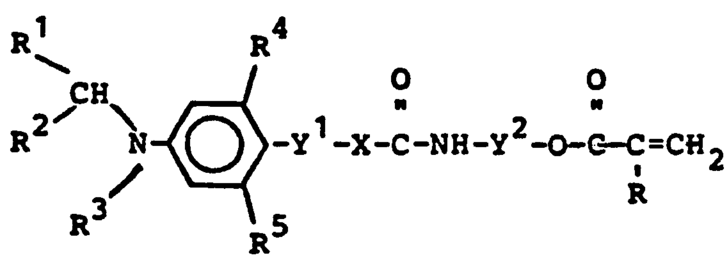
(I)

in welcher

R Wasserstoff oder eine Methylgruppe darstellt,

$Y^1$ für einen gegebenenfalls verzweigten Alkylenrest mit 1 bis 6 C-Atomen, vorzugsweise 1 bis 3 C-Atomen und

$Y^2$ für einen gegebenenfalls verzweigten Alkylenrest mit 2 bis 8 C-Atomen, vorzugsweise 2 bis 5 C-Atomen, stehen,

X Sauerstoff oder eine Gruppe -NH- bedeutet,

$R^1$ und $R^2$ gleich oder verschieden sind und Wasserstoff, eine gegebenenfalls durch eine oder mehrere (vorzugsweise nur eine) Hydroxy-, Amino-, Epoxy-, Urethan-, Harnstoff-, Ester- oder Ethergruppen substituierte Alkyl-, Alkenyl-, Cycloalkyl-, Cycloalkenyl-, Aryl-, Aralkyl- oder Alkarylgruppe mit 1 bis 11 C-Atomen bedeuten oder

$R^1$ und $R^2$ zusammen einen 3- bis 6-gliedrigen Ring bilden, welcher gegebenenfalls Stickstoff, Sauerstoff oder Schwefel als Heteroatome enthält,

$R^3$ die Bedeutung von R hat oder für eine Gruppe

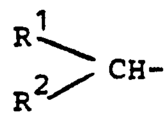

steht oder

$R^2$ und $R^3$ zusammen mit der Gruppe -CH-N- einen 5- oder 6-gliedrigen Ring bilden, welcher gegebenenfalls Sauerstoff als weiteres Heteroatom enthält, und

$R^4$ und $R^5$ gleich oder verschieden sind und Wasserstoff, eine gegebenenfalls durch Halogen substituierte Alkyl- oder Alkenylgruppe mit 1 bis 10 C-Atomen oder Halogen darstellen.

Erfindungsgemäß bevorzugt sind Verbindungen, in denen $R^1$ für Wasserstoff steht. Bevorzugt stellt ferner $R^2$ Wasserstoff oder Methyl (insbesondere Wasserstoff) dar; $R^3$ ist vorzugsweise Methyl oder Ethyl, insbesondere Methyl. $R^4$ und $R^5$ stehen vorzugsweise für Wasserstoff oder Methyl.

Gegenstand der Erfindung sind auch ungesättigte Polyesterharzmassen, welche die Amine der Formel (I) in einer Menge enthalten, welche einem Gehalt von tertiärem Stickstoff von 0,01 bis 0,4 Gew.-%, vorzugsweise 0,02 bis 0,2 Gew.-%, bezogen auf gesamte Masse, entspricht.

Die erfindungsgemäß zu verwendenden Verbindungen der allgemeinen Formel (I) können hergestellt werden, indem man tertiäre Amine der allgemeinen Formel (II)

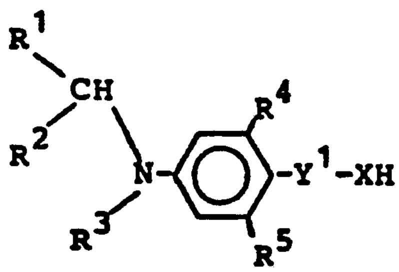

(II)

mit Isocyanaten der allgemeinen Formel (III)

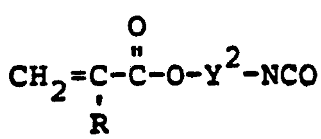

(III)

wobei R, $R^1$ bis $R^5$, $Y^1$, $Y^2$ und X die oben angegebene Bedeutung haben, bei Temperaturen in der Regel zwischen -30°C und 150°C, bevorzugt zwischen 0 und 50°C, gegebenenfalls in einem inerten organischen Lösungsmittel, miteinander umsetzt.

Die zur Herstellung der erfindungsgemäß zu verwendenden Verbindungen dienenden Amine der Formel (II) bzw. Isocyanate der Formel (III) sind bekannt oder lassen sich nach an sich bekannten Verfahren herstellen:

Die Amine der Formel (II) können nach literaturbekannten Methoden erhalten werden, wie sie z.B. in G. Ferri, Reaktionen der organischen Synthese, Georg Thieme-Verlag, Stuttgart (1978) in Kapitel 1.3 und in Kapitel 8 beschrieben sind. Synthesewege für Isocyanate der Formel (III) sind z.B. in US-PS 2 718 516 und US-PS 2 821 544 beschrieben.

Allgemein können Isocyanate der Formel (III) auch erhalten werden, indem man gegebenenfalls als Säureaddukte vorliegende Dihydrooxazine mit Phosgen bei -20 bis +20°C in einem mit Wasser nicht mischbaren Lösungsmittel in Gegenwart einer wäßrigen Lösung einer Base umsetzt, wobei die Dihydrooxazine die allgemeine Formel

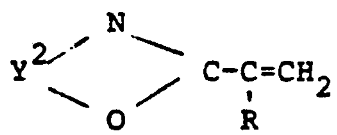

(IV)

aufweisen.

Die Herstellung der als Ausgangsmaterialien einzusetzenden Dihydrooxazine (IV) erfolgt in Analogie zu Verfahren des Standes der Technik. So können die Ausgangsverbindungen (IV) beispielsweise aus N-Hydroxymethylamiden der allgemeinen Formel

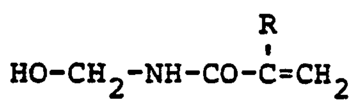

(V)

und einem Olefin nach dem in Liebigs Annalen 697, Seiten 171-180 (1966) beschriebenen Verfahren hergestellt werden.

Vorteilhafter gewinnt man sie aus Formaldehyd, einem Nitril der allgemeinen Formel

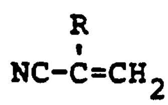

(VI)

und einem Olefin analog dem in Synthesis (1971), Seiten 92-95 beschriebenen Verfahren.

Bei diesem Verfahren wird Formaldehyd in einem Lösungsmittel in Gegenwart äquimolarer Mengen einer starken Säure in einem Temperaturbereich zwischen 30 und 100°C, vorzugsweise bei 50 - 60°C mit dem Nitril der allgemeinen Formel (VI) umgesetzt.

Das dabei gebildete Amidomethyliumion der Formel

$$CH_2\overset{(+)}{=}NH-CO-\overset{R}{\overset{|}{C}}=CH_2 \qquad (VII)$$

reagiert mit dem Olefin in einer polaren Cycloaddition zu dem Säureaddukt des Dihydrooxazins, aus welchem das als Ausgangsmaterial geeignete Dihydrooxazin (IV) durch an sich bekannte Behandlung mit einer Base gewonnen werden kann.

Formaldehyd kann dabei entweder durch Depolymerisation aus Paraformaldehyd oder aus 1,3,5-Trioxan gewonnen werden. Als Lösungsmittel können Carbonsäuren, Carbonsäureanhydride, Ether, z.B. Tetrahydrofuran, Dioxan, Glyme, Diglyme, Amide, z.B. N-Methylpyrrolidon, Harnstoff, 1,3-Dimethylpyrrolidon-2 oder Sulfolan verwendet werden. Bevorzugt sind Carbonsäuren, insbesondere Essigsäure.

Als starke Säuren kommen Schwefelsäure, Phosphorsäure, Chlorwasserstoff, Fluorwasserstoff, Borfluorwasserstoffsäure und Sulfonsäuren in Betracht. Am vorteilhaftesten wird Schwefelsäure benutzt. In jedem Falle ist auf Wasserausschluß zu ächten.

Das Nitril wird in äquimolaren Mengen in einem Temperaturbereich zwischen 30 und 100°C, vorzugsweise bei 50-60°C, zu einer Lösung von Formaldehyd und der starken Säure in dem Lösungsmittel gegeben. Als Olefin bzw. Olefingemisch kommen beispielsweise cis-Buten-2, trans-Buten-2 und 1-Buten, gegebenenfalls im Gemisch, in Betracht. Derartige technische Buten-Gemische, die neben reaktionsfähigen Butenen noch inerte Butane enthalten, fallen beispielsweise bei der destillativen Auftrennung der Spaltprodukte von Benzincrackern als $C_4$-Fraktion an. Andere großtechnische $C_4$-Fraktionen von Benzincrackern mit einem hohen Gehalt an iso-Buten gestatten die Herstellung von Dihydrooxazin-Gemischen mit einem hohen Gehalt an 6,6-Dimethyl-substituierten Isomeren. Da das in den genannten Fraktionen enthaltene 1-Buten im Vergleich zu cis- und trans-Buten-2 reaktionsträger ist, ist der Gehalt an 6-Ethyl-2-vinyl-5,6-dihydrooxazin in den Dihydrooxazin-Gemischen im allgemeinen geringer als der Gehalt der eingesetzten $C_4$-Fraktion an 1-Buten.

Die Reaktion zwischen dem Säureaddukt des Dihydrooxazins und dem Olefin bzw. Olefingemisch kann in einem offenen Gefäß unter Durchleiten oder Zutropfen des Olefins, bei gasförmigen Olefinen auch unter Druck durchgeführt werden.

Die Bildung des Dihydrooxazins aus dem Amidomethyliumion (VII) und dem Olefin erfolgt in einer stereospezifischen cis-Addition (siehe Chem. Ber. 103, 3242 (1970)). Aus einem cis-/trans-Olefin-Gemisch bildet sich deshalb ein entsprechendes cis-/trans-Gemisch des 5,6-Dimethyldi-hydrooxazins.

Wie bereits erwähnt, kann das freie Dihydrooxazin aus dem erhaltenen Säureaddukt in an sich bekannter Weise mittels einer Base, z.B. Natriumhydroxid oder Kaliumhydroxid, freigesetzt werden. Es ist jedoch auch möglich, die Dihydrooxazine in Form ihrer Säureaddukte einzusetzen.

Die Phosgenierung der Dihydrooxazine bzw. Dihydrooxazin-Gemische erfolgt vorzugsweise nach der bekannten Zwei-Phasen-Phosgenierung, wie sie beispielsweise in DE-AS 1 924 535 für die Phosgenierung von Oxazolinen oder von Dihydrooxazinen beschrieben ist. Dabei werden pro Mol Dihydrooxazin bzw. pro Mol Säureaddukt des Dihydrooxazins bzw. Dihydrooxazin-Gemischs im allgemeinen 1 bis 2 Mol Phosgen und pro Mol Phosgen mindestens 2 Mol einer wäßrigen Base eingesetzt. Falls Säureaddukte der Dihydrooxazine eingesetzt werden, benötigt man zusätzlich noch eine der Säure äquivalente Menge an Base.

Als Basen können wäßrige Lösungen von Alkalihydroxiden und -carbonaten verwendet werden. Bevorzugt ist wäßrige Natronlauge. Das Dihydrooxazin und das Phosgen werden im allgemeinen als Lösungen in einem unpolaren, mit Wasser nicht mischbaren Lösungsmittel eingesetzt. Dafür kommen Kohlenwasserstoffe, Halogenkohlenwasserstoffe, z.B. Methylenchlorid, Chloroform, 1,2-Dichlorpropan, Chlorbenzol und Dichlorbenzol, Ester, z.B. Ethylacetat, oder Ether wie Diethyl- oder Dibutylether in Frage. Am vorteilhaftesten ist die Verwendung von Halogenkohlenwasserstoffen, insbesondere von Methylenchlorid.

Die Lösungen des Dihydrooxazins, des Phosgens und der Base werden gleichzeitig und gleichmäßig dem Reaktionsgefäß zugeführt. Dabei ist für eine intensive Durchmischung zu sorgen. Die Temperatur wird bei -20 bis +20°C, vorzugsweise zwischen 0 und 5°C gehalten. Da die Reaktion sehr schnell abläuft, ist eine kontinuierliche Reaktionsführung zweckmäßig.

Als "ungesättigte Polyesterharze" sind erfindungsgemäß vorzugsweise Gemische aus 20 bis 75 Gew.-% (bezogen auf gesamtes Harz) an $\alpha,\beta$-ethylenisch ungesättigten Polyestern und 80 bis 25 Gew.-% damit copolymerisierbarer Monomerer zu verstehen, wie sie z.B. bei J.R. Lawrence, "Polyester Resins", Reinhold Publ. Corp., New York 1960, S. 18 f., und im Kunststoff-Handbuch, Bd. VIII ("Polyester"), Carl Hanser Verlag, München 1973, S. 247-312, beschrieben sind.

Die zu verwendenden ungesättigten Polyester können nach an sich bekannten Verfahren, z.B. durch

Polykondensation mindestens einer α,β-ethylenisch ungesättigten Dicarbonsäure mit 4 bis 20 C-Atomen (oder deren esterbildenden Derivaten), gegebenenfalls in Abmischung mit einer oder mehreren Dicarbonsäuren mit 4 bis 20 C-Atomen, die keine ungesättigten aliphatischen Gruppen enthalten (oder deren esterbildenden Derivaten) mit mindestens einem zweiwertigen Alkohol mit 2 bis 30 C-Atomen hergestellt werden. Bevorzugt zu verwendende ungesättigte Dicarbonsäuren, die keine ungesättigten aliphatischen Gruppen enthalten, oder ihre Derivate sind Phthalsäure oder Phthalsäureanhydrid, Isophthalsäure, Terephthalsäure, Hexa- oder Tetrahydrophthalsäure bzw. deren Anhydride, Endomethylentetrahydrophthalsäure oder deren Anhydrid, Bernsteinsäure bzw. Bernsteinsäureanhydrid und Bernsteinsäureester und -chloride, Glutarsäure, Adipinsäure, Sebacinsäure, Trimellithsäure. Um schwerentflammbare Harze herzustellen, können z.B. Hexachlorendomethylentetrahydrophthalsäure, Tetrachlor-Phthalsäure oder Tetrabromphthalsäure verwendet werden. Flammwidrigkeit kann auch erreicht werden durch Zusatz von halogenhaltigen, nicht im Polyester einkondensierten Verbindungen, beispielsweise Chlorparaffin. Bevorzugt zu verwendende Polyester enthalten Maleinsäurereste, die bis zu 50 Mol-% durch Phthalsäure- oder Isophthalsäurereste ersetzt sein können. Bevorzugte zweiwertige Alkohole sind Ethylenglykol, Propandiol-1,2, Propandiol-1,3, Diethylenglykol, Dipropylenglykol, Butandiol-1,3, Butandiol-1,4, Neopentylglykol, 2-Ethylpropandiol-1,3, Hexandiol-1,6, Perhydrobisphenol, oxalkylierte Bisphenole. Die Säurezahl der Polyester kann zwischen 1 und 100, die OH-Zahlen zwischen 10 und etwa 150 und die rechnerischen Molekulargewichte zwischen etwa 500 und 10 000, vorzugsweise zwischen etwa 700 und 3000 (berechnet nach Säure- und OH-Zahl) liegen.

Bevorzugte copolymerisierbare Vinyl- und Vinylidenverbindungen in den erfindungsgemäßen Massen sind die in der Polyestertechnologie gebräuchlichen ungesättigten Verbindungen, die bevorzugt α-substituierte Vinylgruppen oder β-substituierte Allylgruppen tragen, insbesondere Styrol, aber auch beispielsweise kernchlorierte und -alkylierte bzw. -alkenylierte Styrole, wobei die Alkylgruppen 1-4 Kohlenstoffatome enthalten können, z.B. Vinyltoluol, Divinylbenzol, α -Methylstyrol, tert.-Butylstyrole, Chlorstyrole; Vinylester von Carbonsäuren mit 2-6 Kohlenstoffatomen, bevorzugt Vinylacetat; Vinylpyridin, Vinylnaphthalin, Vinylcyclohexan, Acrylsäure und Methacrylsäure und/oder ihre Ester (vorzugsweise Vinyl-, Allyl- und Methallylester) mit 1-4 Kohlenstoffatomen in der Alkoholkomponente, ihre Amide und Nitrile, Maleinsäureanhydrid, -halb- und -diester mit 1 bis 4 Kohlenstoffatomen in der Alkoholkomponente, -halb- und -diamide oder cyclische Imide wie N-Methylmaleinimid oder N-Cyclohexylmaleinimid, Allylverbindungen wie Allylbenzol und Allylester, wie Allylacetat, Phthalsäurediallylester, Isophthalsäurediallylester, Fumarsäurediallylester, Allylcarbonate, Diallylcarbonate, Triallylphosphat und Triallylcyanurat.

Die erfindungsgemäßen Massen enthalten 0,01 bis 0,4 Gew.-%, bevorzugt 0,02 bis 0,2 Gew.-% an aktivem Stickstoff in Form von Verbindungen der Formel (I). Die Massen sind an sich lagerbeständig.

Um die erfindungsgemäßen Massen auch bei längerer Lagerung vor unerwünschter vorzeitiger Polymerisation zu bewahren, werden ihnen vorzugsweise 0,001-0,5 Gewichtsteile, bezogen auf gesamtes Harz, an Polymerisationsinhibitoren oder Antioxydantien zugesetzt. Bevorzugte Hilfsmittel dieser Art sind beispielsweise Phenole und Phenolderivate, vorzugsweise sterisch gehinderte Phenole, die in beiden o-Stellungen zur phenolischen Hydroxygruppe Alkylsubstituenten mit 1 bis 6 C-Atomen enthalten, Amine, vorzugsweise sekundäre Arylamine und ihre Derivate, Chinone, Kupfersalze organischer Säuren, Anlagerungsverbindungen von Kupfer-(I)halogeniden an Phosphite, z.B. 4,4'-Bis-(2,6-di-tert.-butylphenol), 1,3,5-Trimethyl-2,4,6-tris-(3,5-di-tert.-butyl-4-hy-droxybenzyl)-benzol, 4,4'-Butyliden-bis-(6-tert.-butyl-m-kresol), 3,5-Di-tert.-butyl-4-hydroxybenzyl-phosphonsäurediethylester, N,N'-Bis-(β-naphthyl)p-phenylendiamin, N,N'-Bis-(1-methylheptyl)-p-phenylen-diamin, Phenyl-β-naphthylamin, 4,4'-Bis(α,α -dimethylbenzyl)-diphenylamin, 1,3,5-Tris-(3,5-di-tert.-butyl-4-hydroxy-hydrocinnamoyl)-hexahydro-s-triazin, Hydroinon, p-Benzochinon, Toluhydrochinon, p-tert.-Butylenzcatechin, Chloranil, Naphthochinon, Kupfernaphthenat, Kupferoctoat, Cu(I)Cl/Triphenylphosphit, Cu(I)Cl/Trimethylphosphit, Cu(I)Cl/Trischlorethylphosphit, Cu(I)Cl/Tripropylphosphit, p-Nitrosodimethylanilin. Weitere bevorzugte Stabilisatoren sind in "Methoden der organischen Chemie" (Houben-Weyl), 4. Auflage, Band XIV/1, S. 433-452, Georg Thieme-Verlag, Stuttgart, 1961, beschrieben. Sehr gut geeignet ist z.B. Hydrochinon in einer Konzentration von 0,01-0,05 Gewichtsteile, bezogen auf 100 Gewichtsteile ungesättigten Polyester.

Vor der Härtung werden den Harzen Polymerisationsinitiatoren, vorzugsweise Diacylperoxide oder Percarbonate, in Mengen von 0,5 bis 10 Gew.-%, vorzugsweise 1 bis 5 Gew.-%, bezogen auf zu härtendes Harz, zugesetzt. Bevorzugte Initiatoren sind z.B. Diacetylperoxid, Dibenzoylperoxid, Di-p-chlorbenzoylperoxid, Bis-(2-methylbenzoyl)peroxid, Phthaloylperoxid, Succinylperoxid, Dilauroylperoxid, Acetylcyclohexansulfonylperoxid, Isopropylpercarbonat, Cyclohexylpercarbonat und Bis-(4-tert.-butyl-cyclohexyl)-percarbonat. Andere geeignete Initiatoren sind Peroxyester wie tert.-Butylperoxyacetat, tert.-Butylperoxybenzoat, tert.-Butylperoctoat, Dicyclohexylperoxydicarbonat oder 2,5-Dimethylhexan-2,5-di-peroctoat, Alkylperoxide wie Bis-(tert.-butylperoxybutan), Dicumylperoxid, tert.-Butylcumylperoxid, Hydroperoxide wie Cumolhydroperoxid, tert.-Butylhydroperoxid, Cyclohexanonhydroperoxid, Methylethylketonhydroperoxid, Perketale oder Ketonperoxide wie Acetylacetonperoxid.

Vorzugsweise werden diese Radikalinitiatoren den erfindungsgemäßen Massen in Form einer Paste in einem geeigneten Verdünnungsmittel, z.B. Dioctylphthalat oder ähnlichen an sich bekannten Weichmachern, zugesetzt. Bevorzugt enthält die Paste ca. 50 % an Initator.

Die erfindungsgemäßen Massen können als chemische Verdicker Oxide und/oder Hydroxide der Metalle der 2. Hauptgruppe des Periodensystems, bevorzugt des Magnesiums und Calciums, in Mengen von 0,1 - 10, vorzugsweise von 1,0 - 4,0 Gewichtsteilen, bezogen auf 100 Gewichtsteile Harz enthalten. Die genannten

chemischen Verdicker können auch teilweise durch Zinkoxid ersetzt sein.

Ferner können die Massen auch 5 bis 100, vorzugsweise 10 bis 40 Gewichtsteile, bezogen auf 100 Gewichtsteile des Harzes, an faserförmigen Verstärkungsmaterialien enthalten. Als solche eignen sich anorganische Fasern wie Metall-, Asbest-, Kohlenstoff-, insbesondere Glasfasern und organische Fasern, z.B. Baumwoll-, Polyamid-, Polyester-, Polyacrylnitril-oder Polycarbonatfasern.

Als anorganische Füllstoffe, welche z.B. in Mengen von 50 bis 500 Gewichtsteilen, bezogen auf 100 Gewichtsteile des Harzes eingesetzt werden können, kommen z.B. Kreide, Talkum, Quarz- und Schiefermehl, Kaolin, Kalkspat, Dolomit, Glimmer, Schwerspat, Kieselgur und Tonerden in Betracht.

Andere übliche Zuschlagstoffe, die mitverwendet werden können, sind z.B. organische und anorganische Pigmente, Farbstoffe, Gleit- und Trennmittel wie Zinkstearat, Thixotropiermittel, UV-Absorber, schwungmindernde Additive.

Die erfindungsgemäßen polymerisierbaren Polyesterharzmassen eignen sich insbesondere als Mörtel und Spachtelmassen. Es ist jedoch auch möglich, aus ihnen alle Arten von in der Kälte aushärtenden Formteilen herzustellen, z.B. in den verschiedensten Gebieten der Bauindustrie, der Elektroindustrie, des Bootsbaus und in der Kraftfahrzeugindustrie.

Die nachfolgenden Beispiele dienen zur Erläuterung der Erfindung. Wenn nicht anders vermerkt, sind Mengenangaben als Gewichtsteile bzw. Gewichtsprozente zu verstehen.

**Ausgangsmaterialien**

1. Polyesterharz I:

Aus 89 Mol Diethylenglykol, 13 Mol Ethylenglykol und 98,1 Mol Maleinsäureanhydrid wird durch Schmelzkondensation ein Polyester hergestellt. Dabei werden gleichzeitig 42,1 Mol Dicyclopentadien addiert. Anschließend wird das Harz zu einer 63 %igen Lösung in Styrol gelöst und mit 0,04 % Chloranil und 0,01 % Kupfernaphthenat, jeweils bezogen auf das reine Polyesterharz, stabilisiert. Das erhaltene Polyesterharz hat eine Viskosität von 480 mPas (bei 25° C) und eine Säurezahl von 10.

2. Polyesterharz II:

Ungesättigtes Polyesterharz, das von der Bayer AG unter der Bezeichnung Leguval(R) W 18 erhältlich ist. Es dient als Grundharz zur Mörtelherstellung.

**Formeln der eingesetzten Beschleuniger**

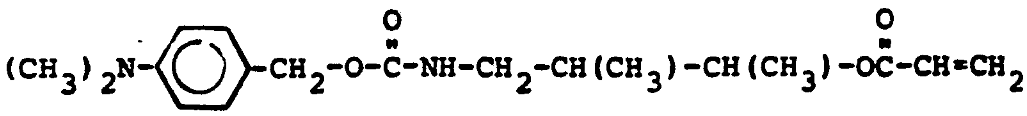

(A)

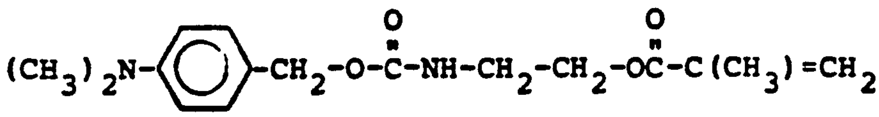

(B)

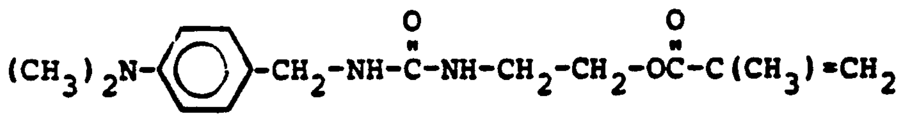

(C)

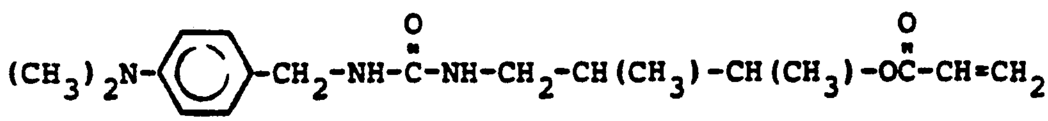

(D)

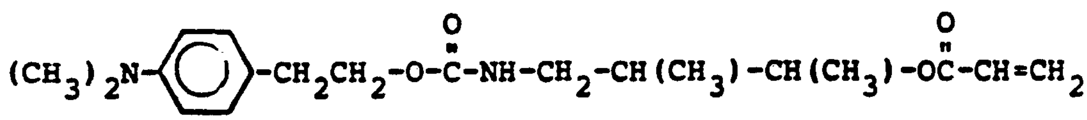

(E)

Polykondensationsprodukt aus

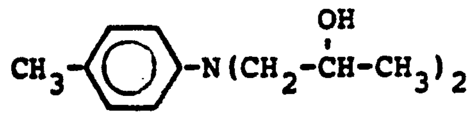

und $HO_2C-(CH_2)_4-CO_2H$ (Vergleich)

**Anwendungsbeispiele**

Unter Verwendung der obengenannten Beschleuniger werden aus den Polyesterharzen I und II kalthärtbare Gießharzmassen hergestellt. Der in der nachstehenden Tabelle angegebene Gehalt an aromatisch gebundenem Stickstoff im Harz ermöglicht einen Vergleich der Reaktivität der einzelnen Beschleuniger. Die Reaktivität wird bestimmt, indem die Beschleuniger/Harzmischung bei einer Anfangstemperatur von 25° C mit 2 % Benzoylperoxid-Paste (50 %ig) ausgehärtet wird. Die Bestimmung der Gelzeit, Härtezeit und Maximaltemperatur erfolgt gemäß DIN 16945.

Härtung in Polyesterharz I

| Beschleuniger | Gew.-% im Harz | % N im Harz | Gelzeit (min) | Härtezeit (min) | max. Temp. (°C) |
|---|---|---|---|---|---|
| A | 1,52 | 0,064 | 6,1 | 9,8 | 108 |
| B | 1,52 | 0,07 | 6,2 | 9,6 | 105 |
| C | 1,39 | 0,064 | 4,4 | 7,2 | 110 |
| D | 1,61 | 0,064 | 4,6 | 7,2 | 108 |
| E | 1,58 | 0,064 | 3,6 | 6,0 | 108 |
| Vergleich | 2,0 | 0,064 | 11,0 | 17,2 | 110 |

Härtung in Polyesterharz II

| | | | | | |
|---|---|---|---|---|---|
| E | 1,49 | 0,060 | 1,9 | 4,5 | 154 |
| D | 1,43 | 0,060 | 2,3 | 4,8 | 158 |
| Vergleich | 1,85 | 0,060 | 4,3 | 7,0 | 144 |

## Patentansprüche

1. Ungesättigte Polyesterharzmasse, enthaltend ein N,N-Dialkylarylamin als Polymerisationsbeschleuniger, dadurch gekennzeichnet, daß der Beschleuniger eine Verbindung der allgemeinen Formel

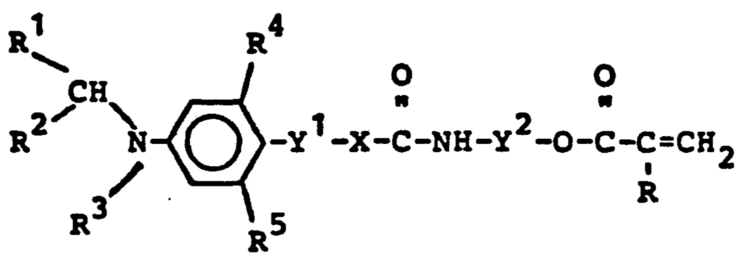
(I)

ist, in welcher
R Wasserstoff oder eine Methylgruppe darstellt,
$Y^1$ für einen gegebenenfalls verzweigten Alkylenrest mit 1 bis 6 C-Atomen, vorzugsweise 1 bis 3 C-Atomen und
$Y^2$ für einen gegebenenfalls verzweigten Alkylenrest mit 2 bis 8 C-Atomen, vorzugsweise 2 bis 5 C-Atomen, stehen,
X Sauerstoff oder eine Gruppe -NH- bedeutet,
$R^1$ und $R^2$ gleich oder verschieden sind und Wasserstoff, eine gegebenenfalls durch eine oder mehrere (vorzugsweise nur eine) Hydroxy-, Amino-, Epoxy-, Urethan-, Harnstoff-, Esteroder Ethergruppen substituierte Alkyl-, Alkenyl-, Cycloalkyl-, Cycloalkenyl-, Aryl-, Aralkyl- oder Alkarylgruppe mit 1 bis 11 C-Atomen bedeuten oder
$R^1$ und $R^2$ zusammen einen 3- bis 6-gliedrigen Ring bilden, welcher gegebenenfalls Stickstoff, Sauerstoff oder Schwefel als Heteroatome enthält,
$R^3$ die Bedeutung von $R^1$ hat oder für eine Gruppe

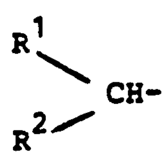

steht oder
$R^2$ und $R^3$ zusammen mit der Gruppe

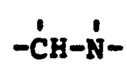

einen 5-oder 6-gliedrigen Ring bilden, welcher gegebenenfalls Sauerstoff als weiteres Heteroatom enthält, und
$R^4$ und $R^5$ gleich oder verschieden sind und Wasserstoff, eine gegebenenfalls durch Halogen substituierte Alkyl- oder Alkenylgruppe mit 1 bis 10 C-Atomen oder Halogen darstellen, und der Beschleuniger der Formel (I) in einer solchen Menge enthalten ist, daß der Gehalt an tertiären Stickstoff 0,01 bis 0,4 Gew.%, bezogen auf gesamte Masse, beträgt.

2. Masse nach Anspruch 1, dadurch gekennzeichnet, daß der Rest $R^1$ für Wasserstoff steht.

3. Masse nach Anspruch 1 oder 2, dadurch gekennzeichnet, daß $R^2$ Wasserstoff oder Methyl darstellt.
4. Masse nach Anspruch 1 bis 3, dadurch gekennzeichnet, daß $R^3$ für Methyl oder Ethyl steht.
5. Masse nach Anspruch 1 bis 4, dadurch gekennzeichnet, daß $R^4$ und $R^5$ für Wasserstoff oder Methyl stehen.
6. Masse nach Anspruch 5, dadurch gekennzeichnet, daß sowohl $R^4$ als auch $R^5$ für Wasserstoff stehen.
7. Masse nach Anspruch 1 bis 6, dadurch gekennzeichnet, daß sie die Verbindung der Formel (I) in einer solchen Menge enthält, daß der Gehalt an tertiärem Stickstoff 0,02 bis 2 Gew.-%, bezogen auf gesamte Masse, beträgt.
8. Masse nach Anspruch 1 bis 7, dadurch gekennzeichnet, daß sie 20 bis 75 Gew.-% (bezogen auf gesamtes Harz) an α,β-ethylenisch ungesättigten Polyestern und 80 bis 25 Gew.-% damit copolymerisierbarer Monomerer enthält.
9. Masse nach Anspruch 8, dadurch gekennzeichnet, daß das copolymerisierbare Monomere Styrol ist.
10. Verwendung von Verbindungen der allgemeinen Formel

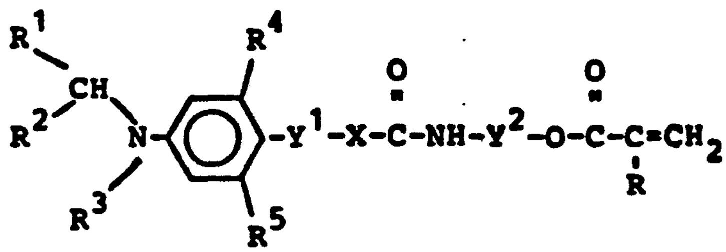

(I)

ist, in welcher
R Wasserstoff oder eine Methylgruppe darstellt,
$Y^1$ für einen gegebenenfalls verzweigten Alkylenrest mit 1 bis 6 C-Atomen, vorzugsweise 1 bis 3 C-Atomen und
$Y^2$ für einen gegebenenfalls verzweigten Alkylenrest mit 2 bis 8 C-Atomen, vorzugsweise 2 bis 5 C-Atomen, stehen,
X Sauerstoff oder eine Gruppe -NH- bedeutet,
$R^1$ und $R^2$ gleich oder verschieden sind und Wasserstoff, eine gegebenenfalls durch eine oder mehrere (vorzugsweise nur eine) Hydroxy-, Amino-, Epoxy-, Urethan-, Harnstoff-, Esteroder Ethergruppen substituierte Alkyl-, Alkenyl-, Cycloalkyl-, Cycloalkenyl-, Aryl- Aralkyl- oder Alkarylgruppe mit 1 bis 11 C-Atomen bedeuten oder
$R^1$ und $R^2$ zusammen einen 3- bis 6-gliedrigen Ring bilden, welcher gegebenenfalls Stickstoff, Sauerstoff oder Schwefel als Heteroatome enthält,
$R^3$ die Bedeutung von $R^1$ hat oder für eine Gruppe

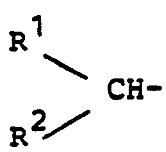

steht oder
$R^2$ und $R^3$ zusammen mit der Gruppe

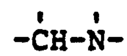

einen 5-oder 6-gliedrigen Ring bilden, welcher gegebenenfalls Sauerstoff als weiteres Heteroatom enthält, und

$R^4$ und $R^5$ gleich oder verschieden sind und Wasserstoff, eine gegebenenfalls durch Halogen substituierte Alkyl- oder Alkenylgruppe mit 1 bis 10 C-Atomen oder Halogen darstellen,

als Polymerisationsbeschleuniger für ungesättigte Polyesterharzmassen, insbesondere Mörtel und Spachtelmassen.

## Claims

1. Unsaturated polyester resin composition containing an N,N-dialkylarylamine as the polymerisation accelerator, characterised in that the accelerator is a compound of the general formula

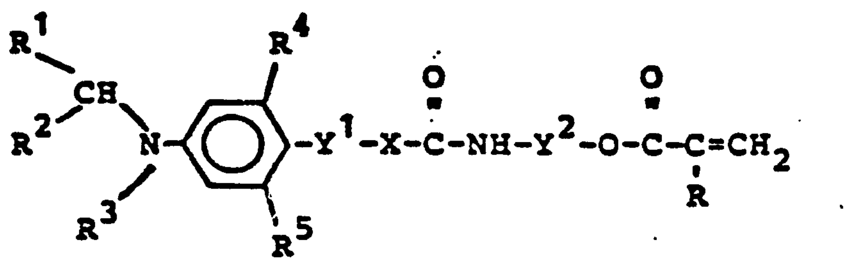

(I)

in which

R represents hydrogen or a methyl group,

$Y^1$ represents an optionally branched alkylene radical with 1 to 6 C atoms, preferably 1 to 3 C atoms and

$Y^2$ represents an optionally branched alkylene radical with 2 to 8 C atoms, preferably 2 to 5 C atoms,

X denotes oxygen or an-NH- group,

$R^1$ and $R^2$ are identical or different and denote hydrogen, or an alkyl, alkenyl, cycloalkyl, cycloalkenyl, aryl, aralkyl or alkaryl group which has 1 to 11 C atoms and is optionally substituted by one or more (preferably only one) hydroxyl, amino, epoxy, urethane, urea, ester or ether groups, or

$R^1$ and $R^2$ together form a 3-membered to 6-membered ring, which optionally contains nitrogen, oxygen or sulphur as hetero-atoms,

$R^3$ has the meaning of $R^1$ or represents a group

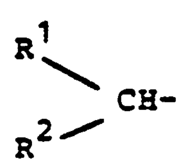

or $R^2$ and $R^3$, together with the

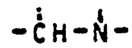

group,

form a 5-membered or 6-membered ring, which optionally contains oxygen as a further heteroatom, and

$R^4$ and $R^5$ are identical or different and represent hydrogen, an alkyl or alkenyl group which has 1 to 10 C atoms and is optionally substituted by halogen, or halogen,

and the accelerator of the formula (I) is contained in the composition in such a quantity that the content of tertiary nitrogen is 0.01 to 0.4% by weight, based on the total composition.

2. Composition according to Claim 1, characterised in that the radical $R^1$ represents hydrogen.

3. Composition according to Claim 1 or 2, characterised in that $R^2$ represents hydrogen or methyl.

4. Composition according to Claim 1 to 3, characterised in that $R^3$ represents methyl or ethyl.

5. Composition according to Claim 1 to 4, characterised in that $R^4$ and $R^5$ represent hydrogen or methyl.

6. Composition according to Claim 5, characterised in that both $R^4$ and $R^5$ represent hydrogen.

7. Composition according to Claim 1 to 6, characterised in that it contains the compound of the formula (I) in an amount such that the content of tertiary nitrogen is 0.02 to 2% by weight, based on the total composition.

8. Composition according to claim 1 to 7, characterised in that it contains 20 to 75% by weight (based on the total resin) of α, β-ethylenically unsaturated polyesters and 80 to 25% by weight of monomers which can be copolymerised with these polyesters.

9. Composition according to Claim 8, characterised in that the copolymerisable monomer is styrene.

10. Use of compounds of the general formula

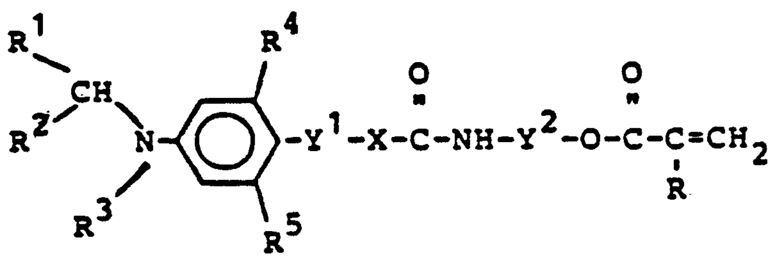

(I)

is, in which

R represents hydrogen or a methyl group,

$Y^1$ represents an optionally branched alkylene radical with 1 to 6 C atoms, preferably 1 to 3 C atoms,

$Y^2$ represents an optionally branched alkylene radical with 2 to 8 C atoms, preferably 2 to 5 C atoms,

X denotes oxygen or an -NH- group,

$R^1$ and $R^2$ are identical or different and denote hydrogen, or an alkyl, alkenyl, cycloalkyl, cycloalkenyl, aryl, aralkyl or alkaryl group which has 1 to 11 C atoms and is optionally substituted by one or more (preferably only one) hydroxyl, amino, epoxy, urethane, urea, ester or ether groups, or

$R^1$ and $R^2$ together form a 3-membered to 6-mem-bered ring, which optionally contains nitrogen, oxygen or sulphur as hetero-atoms,

$R^3$ has the meaning of $R^1$ or represents a group

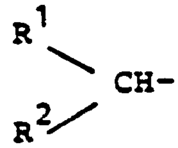

or $R^2$ and $R^3$, together with the

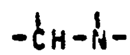

group, form a 5-membered or 6-membered ring, which optionally contains oxygen as a further hetero-atom, and

$R^4$ and $R^5$ are identical or different and represent hydrogen, an alkyl or alkenyl group which has 1 to 10 C atoms and is optionally substituted by halogen, or halogen,

as polymerisation accelerators for unsaturated polyester resin compositions, in particular mortar and knifing fillers.

**Revendications**

1. Mélange à base de résine polyester insaturée, contenant une N,N-dialkylarylamine comme accélérateur de polymérisation, caractérisé en ce que l'accelérateur est un composé de formule générale

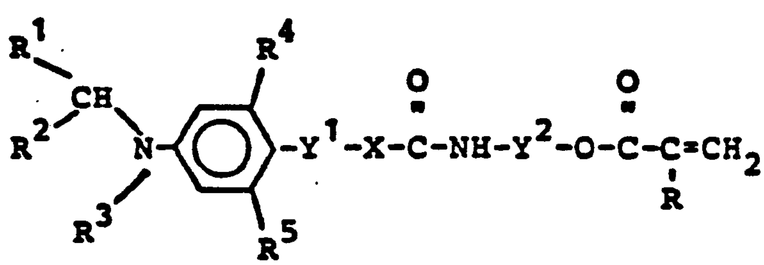

(I)

dans laquelle

R représente l'hydrogène ou un groupe méthyle,

$Y^1$ est un reste alkylène ayant 1 à 6 atomes de carbone de préférence 1 à 3 atomes de carbone, éventuellement ramifié et

$Y^2$ est un reste alkylène ayant 2 à 8 atomes de carbone, de prèférence 2 à 5 atomes de carbone, éventuellement ramifié,

X est l'oxygène ou un groupe -NH-,

$R^1$ et $R^2$ sont identiques ou différents et représentent l'hydrogène, un groupe alkyle, alcényle, cycloalkyle, cycloalcényle, aryle, aralkyle ou alkaryle ayant 1 à 11 atomes de carbone, éventuellement substitué par un ou plusieurs groupes hydroxy, amino, époxy, uréthanne, urée, ester ou éther (de préférence un seul), ou bien

$R^1$ et $R^2$ forment conjointement un noyau de 3 à 6 chaînons qui comprend éventuellement comme hétéroatomes de l'azote, de l'oxygène ou du soufre,

$R^3$ a la définition de $R^1$ ou représente un groupe

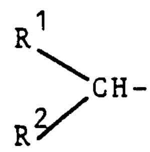

ou bien
$R^2$ et $R^3$ forment conjointement avec le groupe

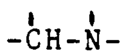

un noyau pentagonal ou hexagonal qui comprend éventuellement de l'oxygène comme autre hétéro-atomé, et

$R^4$ et $R^5$ sont identiques ou différents et représentent l'hydrogène, un groupe alkyle ou alcényle ayant 1 à 10 atomes de carbone éventuellement substitué par un halogène, ou représentent un halogène,

et l'accélérateur de formule (I) est présent en une quantité choisie de manière que la teneur en azote tertiaire soit de 0,01 à 0,4 % en poids par rapport au mélange total.

2. Mélange suivant la revendication 1, caractérisé en ce que le reste $R^1$ est de l'hydrogène.

3. Mélange suivant la revendication 1 ou 2, caractérisé en ce que $R^2$ est l'hydrogène ou le groupe méthyle.

4. Mélange suivant les revendications 1 à 3, caractérisé en ce que $R^3$ est un groupe méthyle ou éthyle.

5. Mélange suivant les revendications 1 à 4, caractèrisé en ce que $R^4$ et $R^5$ représentent l'hydrogène ou le groupe méthyle.

6. Mélange suivant la revendication 5, caractérisé en ce que $R^4$ et $R^5$ représentent tant l'un que l'autre de l'hydrogène.

7. Mélange suivant les revendications 1 à 6, caractérisé en ce qu'il contient le composé de formule (I) en une quantité choisie de manière que la teneur en azote tertiaire soit de 0,02 à 2 % en poids par rapport au mélange total.

8. Mélange suivant les revendications 1 à 7, caractérisé en ce qu'il contient 20 à 75 % en poids (par rapport à la résine totale) de polyesters à non-saturation $\alpha,\beta$-éthylénique et 80 à 25 % en poids de monomères copolymérisables avec eux.

9. Mélange suivant la revendication 8, caractérisé en ce que le monomère copolymérisable est le styrène.

10. Utilisation de composés de formule générale

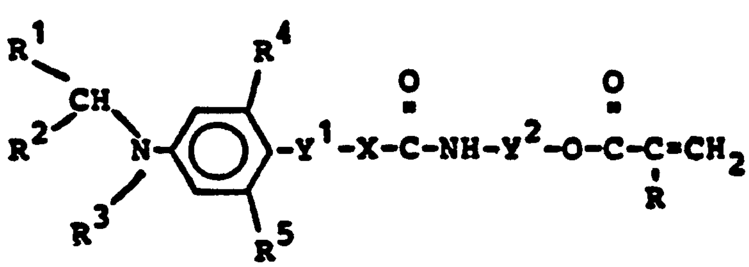

(I)

dans laquelle

R représente l'hydrogène ou un groupe méthyle,

$Y^1$ est un reste alkylène ayant 1 à 6 atomes de carbone, de préférence 1 à 3 atomes de carbone, eventuellement ramifié et

$Y^2$ est un reste alkylène ayant 2 à 8 atomes de carbone, de préférence 2 à 5 atomes de carbone, éventuellement ramifié,

X est l'oxygène ou un groupe -NH-,

$R^1$ et $R^2$ sont identiques ou différents et représentent l'hydrogène, un groupe alkyle, alcényle, cycloalkyle, cycloalcényle, aryle, aralkyle ou alkaryle ayant 1 à 11 atomes de carbone, éventuellement substitué par un ou plusieurs groupes hydroxy, amino, époxy, uréthanne, urée, ester ou éther (de préférence un seul), ou bien

$R^1$ et $R^2$ forment conjointement un noyau de 3 à 6 chaînons qui comprend éventuellement comme hétéro-atomes de l'azote, de l'oxygène ou du soufre,

$R^3$ a la définition de $R^1$ ou représente un groupe

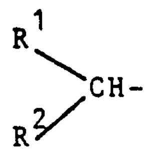

ou bien

$R^2$ et $R^3$ forment conjointement avec le groupe

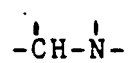

un noyau pentagonal ou hexagonal qui comprend éventuellement de l'oxygène comme autre hétéro-atome, et

$R^4$ et $R^5$ sont identiques ou différents et représentent l'hydrogène, un groupe alkyle ou alcényle ayant 1 à 10 atomes de carbone éventuellement substitué par un halogène, ou représentent un halogène,

comme accélérateurs de polymérisation pour des mélanges à base de résine polyester insaturée, notamment pour des mortiers et mastics.